# EUROPÄISCHE PATENTSCHRIFT

(11) **EP 4 042 923 B1**
(45) Veröffentlichungstag und Bekanntmachung des Hinweises auf die Patenterteilung: **15.10.2025**
(21) Anmeldenummer: 22155349.8
(22) Anmeldetag: 07.02.2022
(51) Int. Cl.: A47L 15/00, A47L 15/42

(54) **GEWERBLICHE GESCHIRRSPÜLMASCHINE UND VERFAHREN ZUM BETREIBEN EINER SOLCHEN**
COMMERCIAL DISHWASHER AND METHOD FOR OPERATING THE SAME
LAVE-VAISSELLE COMMERCIAL ET SON PROCÉDÉ DE FONCTIONNEMENT

(30) Priorität: 11.02.2021 DE 102021103231
(43) Veröffentlichungstag der Anmeldung: 17.08.2022
(73) Patentinhaber: Winterhalter Product & Technology GmbH, 88074 Meckenbeuren (DE)
(72) Erfinder: KLAUSMANN, Matthias, 88074 Meckenbeuren (DE); DUDEN, Roman, 88048 Friedrichshafen (DE)
(74) Vertreter: Appelt, Christian W.

(56) Entgegenhaltungen:
- WO-A1-2006/063895
- WO-A1-2010/120657
- WO-A2-01/85003
- CN-A- 104 739 345
- DE-A1- 102007 063 618
- DE-A1- 102011 083 179
- DE-A1- 102013 014 553

## Beschreibung

Die vorliegende Erfindung betrifft eine gewerbliche Geschirrspülmaschine und ein Verfahren zum Betreiben einer solchen gewerblichen Geschirrspülmaschine. Solche gewerblichen Geschirrspülmaschinen umfassen einen Spülraum, in den zu spülendes Geschirr eingesetzt werden kann, und eine Abgabevorrichtung zur Abgabe einer Behandlungsflüssigkeit oder mehrerer unterschiedlicher Behandlungsflüssigkeiten.

Solche gewerblichen Geschirrspülmaschinen arbeiten in der Regel mit sehr kurzen Arbeitszyklen, und es finden eine Vielzahl von Arbeitszyklen pro Tag statt. Jeder Arbeitszyklus umfasst häufig einen oder mehrere Betriebszyklen, insbesondere einen Spülgang, einen Nachspülgang und/oder einen Trocknungsvorgang.

Nach jedem Arbeitszyklus wird der Spülraum geöffnet und das gespülte Geschirr kann entnommen werden. Ein Öffnen der gewerblichen Spülmaschine nach dem Arbeitszyklus zur Entnahme des Spülguts führt jedoch dazu, dass der während des Arbeitszyklus gebildete Wasserdampf oder Wrasen in die Umgebung entweicht, was dazu führt, dass in dem Arbeitsraum, in dem sich die Geschirrspülmaschine befindet, ein feucht-warmes Klima entsteht, insbesondere wenn eine Vielzahl von Arbeitszyklen in einem kurzen Zeitraum abgewickelt werden.

Um diesen negativen Effekt zu mildern, schlägt die EP 1 355 560 B1 eine gewerbliche Geschirrspülmaschine mit einem Wärmetauscher bzw. Entfeuchter vor, wobei die Geschirrspülmaschine so ausgebildet ist, dass sie eine Vorrichtung zur Erzeugung eines Luftstroms umfasst, der in einem geschlossenen Luftkreislauf zirkuliert, sodass die feuchte Luft aus dem Spülraum herausgeleitet und wieder in den Spülraum eingeleitet werden kann, wobei in dem Luftkreislauf der Wärmetauscher bzw. der Entfeuchter vorgesehen ist.

Aus der DE 10 2007 063 618 A1 ist ferner eine Hauben-Geschirrspülmaschine bekannt, die eine Kondensatsniederschlagseinrichtung umfasst, die bei geschlossener Haube mit der Spülkammer verbunden ist, wobei die Kondensatsniederschlagseinrichtung ein Gebläse zum Absaugen von Dampf und/oder Luft aus der geschlossenen Spülkammer umfasst, sodass dieser Dampf vor Abgabe an die Arbeitsumgebung in der Kondensatsniederschlagseinrichtung zumindest teilweise kondensiert wird. Die WO 2006/063895 A1 offenbart eine Haushalts-Geschirrspülmaschine und ein Verfahren zum Betreiben desselben.

Aus der DE 10 2011 083 179 B4 schließlich ist eine Transportspülmaschine bekannt, die eine Kondensereinrichtung umfasst, um durch Kondensation der Abluft Feuchtigkeit zu entziehen, wobei die Leistung der Kondensereinrichtung regelbar ist.

Es ist eine Aufgabe der vorliegenden Erfindung, eine solche gewerbliche Geschirrspülmaschine weiter zu verbessern.

Diese Aufgabe wird durch eine gewerbliche Geschirrspülmaschine gemäß Anspruch 1 und ein Verfahren gemäß Anspruch 14 gelöst. Die Ansprüche 2 bis 13 betreffen besonders bevorzugte Ausführungsformen der erfindungsgemäßen Geschirrspülmaschine.

Eine gewerbliche Geschirrspülmaschine gemäß der Erfindung umfasst einen Spülraum, in dem mindestens eine Abgabevorrichtung zur Abgabe einer Behandlungsflüssigkeit angeordnet ist. Die Geschirrspülmaschine umfasst gemäß der Erfindung ferner:
- einen Wrasenkreislauf, der so ausgebildet ist, dass Wrasen aus dem Spülraum herausgeleitet und wieder in den Spülraum eingeleitet werden kann,
- einen Boiler zum Erwärmen von Behandlungsflüssigkeit, wobei der Boiler mittels einer Zulaufleitung mit der Behandlungsflüssigkeit gefüllt werden kann und wobei der Boiler mit einer Abgabeleitung verbunden ist, über die die Behandlungsflüssigkeit an die mindestens eine Abgabevorrichtung in dem Spülraum transportiert werden kann,
- wobei der Zulaufleitung eine Ventilvorrichtung, insbesondere ein Magnetventil, zugeordnet ist, die in einer Öffnungsstellung ein Zuführen von Behandlungsflüssigkeit in den Boiler ermöglicht oder in einer Schließstellung ein Zuführen von Behandlungsflüssigkeit in den Boiler unterbindet, und wobei der Abgabeleitung eine Beförderungs-Vorrichtung, insbesondere eine Pumpe, zugeordnet ist, die in einem Einschaltzustand eine Abgabe von Behandlungsflüssigkeit aus dem Boiler an die mindestens eine Abgabevorrichtung in dem Spülraum ermöglicht oder und in einem Ausschaltzustand eine solche Abgabe unterbindet,
- einen Wärmetauscher, der so mit dem Wrasenkreislauf und der Zulaufleitung gekoppelt ist, dass ein Wärmeaustausch zwischen dem durch den Wrasenkreislauf geführten Wrasen und der durch die Zulaufleitung geführten Behandlungsflüssigkeit stattfinden kann,
- eine Absaugvorrichtung, die so ausgebildet ist, dass sie Wrasen durch den Wrasenkreislauf zirkuliert, wobei die Absaugvorrichtung mittels einer Regelvorrichtung in einen Einschaltzustand oder einen Ausschaltzustand geschaltet werden kann.

Bei der Behandlungsflüssigkeit kann es sich um unterschiedliche Behandlungsflüssigkeiten handeln, beispielsweise eine Wasch- oder Reinigungsflüssigkeit. Insbesondere kann es sich bei der Behandlungsflüssigkeit bei einer Geschirrspülmaschine gemäß der vorliegenden Erfindung um eine Nachspülflüssigkeit handeln, weil insbesondere diese Nachspülflüssigkeit in einem Boiler auf die gewünschte Betriebstemperatur gebracht wird und die Nachspülflüssigkeit im Rahmen eines abschließenden Betriebszyklus auf das Geschirr aufgebracht wird, bevor der Wrasen gekühlt bzw. entfeuchtet wird. Daher bietet sich insbesondere diese Nachspülflüssigkeit an, die durch den Wärmetauscher bzw. den Entfeuchter geführt wird, sodass diese Nachspülflüssigkeit in dem Wärmetauscher bereits vorgewärmt wird, bevor sie in den Boiler weitergeleitet wird.

Bei der Ventilvorrichtung, die sich in der Zulaufleitung befindet, handelt es sich insbesondere um ein Magnetventil. Es können aber auch diverse andere Ventilvorrichtungen verwendet werden, wobei der Begriff Ventilvorrichtung im weiteren Sinne als eine Vorrichtung zu verstehen ist, die ein Zuführen von Behandlungsflüssigkeit ermöglicht, wenn sie sich in einer Öffnungsstellung befindet, und unterbindet, wenn sie sich nicht in einer Öffnungsstellung befindet. Das Zuführen von Behandlungsflüssigkeit kann einfach durch ein Öffnen der Ventilvorrichtung realisiert werden, weil beispielsweise die Behandlungsflüssigkeit auf der zu führenden Seite unter Druck steht, es ist aber auch möglich, dass zusätzlich eine aktive Vorrichtung, wie eine Pumpe, verwendet wird, die ein Zuführen von Behandlungsflüssigkeit unterstützt. Diese aktive Vorrichtung kann Teil der Ventilvorrichtung sein oder dieser Ventilvorrichtung vorgeschaltet oder nachgeschaltet sein.

Gemäß der vorliegenden Erfindung umfasst die Geschirrspülmaschine eine Steuervorrichtung, die so ausgebildet ist, dass
- sie die Absaugvorrichtung während eines Betriebszyklus A für einen Gesamt-Zeitraum (Δt-Gesamt), der sich von einem Start-Zeitpunkt (t_{S}) bis zu einem End-Zeitpunkt (t_{E}) erstreckt, kontinuierlich in ihren Einschaltzustand schaltet, und so dass
- sie die Ventilvorrichtung so schaltet, dass sie sich während des Betriebszyklus A nicht über den gesamten Gesamt-Zeitraum (Δt-Gesamt) kontinuierlich in ihrer Öffnungsstellung befindet.

Dabei ist die Steuervorrichtung erfindungsgemäß so ausgebildet, dass sie
- die Ventilvorrichtung so steuert, dass sie sich während mindestens zwei um einen Unterbrechungs-Zeitraum (Δty) voneinander getrennten Zeiträumen (Δt1, Δt2) in ihrer Öffnungsstellung befindet, während sie sich innerhalb des Unterbrechungs-Zeitraums (Δty) in ihrer Schließstellung befindet.

Optional ist die Steuervorrichtung dabei ferner so ausgebildet, dass sie
- die Ventilvorrichtung so steuert, dass sie erst nach einer zeitlichen Verzögerung (Δtx) nach dem Start-Zeitpunkt (tS) von ihrer Schließstellung in eine Öffnungsstellung geschaltet wird.

Der Erfinder hat festgestellt, dass eine solche Steuerung deutlich bessere Resultate liefert, insbesondere findet eine sehr effektive Entfeuchtung und Kühlung des Wrasen statt, wobei insbesondere die gegebenen Verhältnisse, insbesondere die Größe des Boilers und die damit verbundene maximale Aufnahmefähigkeit der Behandlungsflüssigkeit, insbesondere der Nachspülflüssigkeit, berücksichtigt werden bzw. die Steuerung beeinflussen und die entsprechenden Rahmenbedingungen bestimmen.

Dadurch kann die Belastung der Raumluft des Arbeitsraums, in dem sich die Geschirrspülmaschine befindet, bei gleichzeitig möglichst geringem Energieaufwand gesenkt werden. Auch ist es möglich, die Arbeitszyklen möglichst kurz zu halten, was die Gesamtleistung der Geschirrspülmaschine steigert. Insgesamt werden damit die Ressourcen geschont, die Arbeitsvorgänge optimiert und, wenn gewünscht, verkürzt, wobei gleichzeitig die Bedingungen für das Bedienpersonal der Geschirrspülmaschine in dem Arbeitsraum verbessert werden.

Bevorzugt liegt eine zeitliche Verzögerung Δtx nach dem Zeitpunkt t_{S}, zu dem die Absaugvorrichtung eingeschaltet wird, so dass Wrasen durch den Wrasenkreislauf zirkuliert wird, nach der die Ventilvorrichtung von ihrer Schließstellung in ihrer Öffnungsstellung geschaltet wird, in einem Bereich von 5 Sekunden bis 60 Sekunden, bevorzugt von 10 Sekunden bis 50 Sekunden, insbesondere in einem Bereich von 20 bis 40 Sekunden. Je nach Größe und maximaler Volumenaufnahme des Boilers wird die Ventilvorrichtung wieder von ihrer Öffnungsstellung in ihre Schließstellung geschaltet, beispielsweise wenn der Boiler bis zu einem vorbestimmten und bevorzugt regelbaren Prozentsatz gefüllt ist oder die maximale Boilerkapazität erreicht ist. Bevorzugt bleibt die Absaugvorrichtung nach einem (letzten) Schließen der Ventilvorrichtung noch einen gewissen Zeitraum eingeschaltet, bevorzugt für einen Zeitraum von 5 Sekunden bis 25 Sekunden, bevorzugt von 5 Sekunden bis 20 Sekunden, insbesondere in einem Bereich von 10 bis 15 Sekunden.

Gemäß einer besonders bevorzugten Ausführungsform der gewerblichen Geschirrspülmaschine ist die Steuervorrichtung so ausgebildet, dass sie die Ventilvorrichtung so steuert, dass sie sich während mindestens drei voneinander getrennten Zeiträumen (Δt1, Δt2, Δt3), bevorzugt während mindestens vier voneinander getrennten Zeiträumen (Δt1, Δt2, Δt3, Δt4, ...., Δti) in ihrer Öffnungsstellung befindet, während sie sich zwischen diesen Zeiträumen in ihrer Schließstellung befindet.

Es hat sich herausgestellt, dass dieses getaktete Vorgehen, mit einem mehrfachen Wechsel der Ventilvorrichtung von ihrer Öffnungsstellung in ihre Schließstellung, besonders effektiv eine Kühlung des Wrasens und damit eine Entfeuchtung des Wrasens sicherstellt. Insbesondere 3 bis 4 voneinander getrennte Zeiträume haben sich dabei als besonders effektiv und geeignet herausgestellt.

Bevorzugt wird auch bei dieser mehrfachen oder getakteten Steuerung der Ventilvorrichtung die Ventilvorrichtung das erste Mal verzögert eingeschaltet, d. h. mit einer zeitlichen Verzögerung Δtx nach dem Zeitpunkt t_{S}, zu dem die Absaugvorrichtung eingeschaltet wird. Bevorzugt ist die Länge der Verzögerung geringer, wenn die Ventilvorrichtung innerhalb eines Betriebszyklus A mehrfach aus- und eingeschaltet wird, also getaktet betrieben wird. Bevorzugt wird bei einer solchen getakteten Arbeitsweise die Steuervorrichtung so eingestellt, dass diese zeitliche Verzögerung Δtx in einem Bereich von 5 Sekunden bis 20 Sekunden, bevorzugt in einem Bereich von 5 Sekunden bis 15 Sekunden liegt.

Die Länge der einzelnen Zeiträume Δt1, Δt2, Δt3, Δt4, ...., Δti liegt bevorzugt in einem Bereich von 5 Sekunden bis 20 Sekunden, bevorzugt in einem Bereich von 10 Sekunden bis 20 Sekunden, insbesondere in einem Bereich von 10 Sekunden bis 15 Sekunden.

Besonders bevorzugt ist die Steuervorrichtung so eingestellt, dass zumindest zwei der voneinander getrennten Zeiträume Δt1, Δt2, Δt3, Δt4, ...., Δti, bevorzugt alle der voneinander getrennten Zeiträume Δt1, Δt2, Δt3, Δt4, ...., Δti, gleich lang sind. Bevorzugt sind dabei auch der oder die Unterbrechungs- Zeiträume (Δty), innerhalb derer sich die Ventilvorrichtung in ihrer Schließstellung befindet, alle gleich lang. Dies ermöglicht einen gleichmäßigen Ablauf des Verfahrens bei gleichzeitig sehr guten Ergebnissen.

Bei einer besonders bevorzugten Ausführungsform umfasst die erfindungsgemäße Geschirrspülmaschine einen ersten Temperatursensor, der bevorzugt in dem Wrasenkreislauf angeordnet ist, insbesondere in Kreislaufrichtung vor dem Wärmetauscher. Ferner bevorzugt umfasst die erfindungsgemäße Geschirrspülmaschine einen zweiten Temperatursensor, der bevorzugt ebenfalls in dem Wrasenkreislauf angeordnet ist, insbesondere in Kreislaufrichtung nach dem Wärmetauscher.

Bevorzugt werden die Messergebnisse des ersten und/oder des zweiten Temperatursensors der Steuervorrichtung zugeführt, sodass die Steuervorrichtung die Absaugvorrichtung und/oder die Ventilvorrichtung in Abhängigkeit der Messergebnisse des ersten und/oder des zweiten Temperatursensors steuern kann.

Dies führt zu einer weiteren möglichen Optimierung des Verfahrens und insbesondere des Kühlens und des Entfeuchtens des Wrasens, in einer automatisierten Form, wobei insbesondere Änderungen der Umgebungsbedingungen, insbesondere Temperatur des Arbeitsraums oder auch Temperatur der Behandlungsflüssigkeit, wie sie der Vorrichtung zur Verfügung gestellt wird, automatisch berücksichtigt werden können.

Besonders bevorzugt ist die erfindungsgemäße Geschirrspülmaschine so ausgebildet, dass die Steuervorrichtung eine Differenztemperatur der Messwerte des ersten Temperatursensors und der Messwerte des zweiten Temperatursensors ermittelt, wobei die Ventilvorrichtung in Abhängigkeit von dieser Differenztemperatur gesteuert wird. Die Differenztemperatur kann dabei als Gradmesser für die momentane Effektivität des Kühlvorgangs bzw. des Entfeuchtens des Wrasens verwendet werden, sodass die Ventilvorrichtung, wenn sie sich in ihrer Schließstellung befindet, automatisch wieder in ihrer Öffnungsstellung geschaltet werden kann, wenn diese Effektivität sinkt bzw. einen vorher festgelegten Grenzwert erreicht oder unterschreitet.

Bei einer besonders bevorzugten Ausführungsform ist die Steuervorrichtung so ausgebildet, dass sie die Ventilvorrichtung zumindest einmal von ihrer Schließstellung in ihre Öffnungsstellung schaltet, wenn die Differenztemperatur (ΔT) einen festgelegten Grenzwert (ΔTM1) unterschreitet oder einen festgelegten Grenzwert (ΔTM2) für einen festgelegten Zeitraum (ΔtM2) unterschreitet.

Dieser festgelegte Grenzwert (ΔTM1) liegt bei einer bevorzugten Ausführungsform in einem Bereich von 0° Kelvin bis 2° Kelvin, besonders bevorzugt in einem Bereich von 0,5° Kelvin bis 2° Kelvin, besonders bevorzugt einem Bereich von 0,5° Kelvin bis 1° Kelvin. Der festgelegte Grenzwert (ΔTM2) liegt bei einer bevorzugten Ausführungsform in einem Bereich von 0,5° Kelvin bis 3° Kelvin, besonders bevorzugt einen Bereich von 1° Kelvin bis 2° Kelvin, insbesondere bevorzugt in einem Bereich von 1° Kelvin bis 1,5° Kelvin, wobei der festgelegte Zeitraum (ΔtM2) bevorzugt in einem Bereich von 1 Sekunde bis 5 Sekunden, besonders bevorzugt in einem Bereich von 1 Sekunde bis 3 Sekunden liegt.

Bei einer bevorzugten Ausführungsform ist dabei die Steuervorrichtung so ausgebildet, dass sie die Ventilvorrichtung nach einem festgelegten, bevorzugt einstellbaren, Zeitraum (ΔtE) ab dem Wechsel in ihrer Öffnungsstellung wieder in die Schließstellung schaltet. Die Differenztemperatur wird weiter ermittelt, sodass, bevorzugt nach dem oben genannten Prinzip, die Ventilvorrichtung wieder in ihre Öffnungsstellung geschaltet wird, wenn die Differenztemperatur die beschriebenen Bedingungen erfüllt.

Der festgelegte, bevorzugt einstellbare Zeitraum (ΔtE) liegt bevorzugt in einem Bereich von 5 Sekunden bis 20 Sekunden, bevorzugt in einem Bereich von 10 Sekunden bis 20 Sekunden, insbesondere in einem Bereich von 10 Sekunden bis 15 Sekunden.

Die Länge des Gesamt-Zeitraums des Betriebszyklus kann festgelegt sein, und sie kann bei schrittweise in einem Bereich von 80 Sekunden bis 150 Sekunden, bevorzugt einem Bereich von 90 Sekunden bis 120 Sekunden liegen. Es ist jedoch möglich, die Länge des Gesamt-Zeitraums des Betriebszyklus in Abhängigkeit von den Messergebnissen der Temperatursensoren zu regeln, insbesondere in Abhängigkeit des Messergebnisses des ersten Temperatursensors. Insbesondere ist es möglich, den Betriebszyklus zu beenden, wenn die Temperatur des ersten Temperatursensors unter einen festgelegten Wert fällt, beispielsweise kleiner als 50 °C, oder kann festgelegt werden, dass beim Unterschreiten eines solchen festgelegten Werts, oder alternativ nach dem unterschreiten eines solchen festgelegten Werts über einen festgelegten Zeitraum, beispielsweise Zeitraum von 5 Sekunden bis 10 Sekunden, lediglich noch ein "Takt" des Schaltens der Ventilvorrichtung in ihre Öffnungsstellung und danach in ihre Schließstellung durchgeführt wird.

Besonders bevorzugt ist ferner, dass die Geschirrspülmaschine so ausgebildet ist, dass die Steuervorrichtung die Länge der Zeiträume (Δt1, Δt2, Δt3, Δt4) und oder die Länge der zeitlichen Verzögerung (Δtx) oder die Länge des Unterbrechungs-Zeitraums (Δty) in Abhängigkeit der Messergebnisse des ersten Temperatursensors und/oder des zweiten Temperatursensors und/oder der Differenztemperatur (ΔT) regelt. Dadurch kann eine Geschirrspülmaschine besonders effektiv den Gegebenheiten und den besonderen Umständen, insbesondere automatisch, angepasst werden, ohne dass der Benutzer etwas regeln müsste.

Als Wärmetauscher können unterschiedliche Wärmetauscher, insbesondere Direktwärmetauscher eingesetzt werden, die im Stand der Technik bekannt sind. Bevorzugte Wämetauscher sind hier insbesondere Direktwärmetauscher (bei denen die Stoffströme nicht voneinander getrennt sind), Lamellenwärmetauscher (Fin&Tube) und Microchannelwärmetauscher oder andere Wärmetauscher, bei denen die Stoffströme voneinander getrennt sind.

Die Erfindung betrifft ferner ein Verfahren zum Betreiben einer Geschirrspülmaschine, insbesondere einer Geschirrspülmaschine, wie sie oben beschrieben worden ist. Im Hinblick auf die Vorteile eines solchen Verfahrens oder einer solchen Steuerung wird auf die oben beschriebenen Ausführungen verwiesen, um Wiederholungen zu vermeiden.

Die Erfindung und ihre Vorteile werden anhand der nachfolgenden Figuren noch deutlicher:
Fig. 1 zeigt schematisch eine Funktionsskizze einer Ausführungsform einer erfindungsgemäßen Geschirrspülmaschine,
Fig. 2 schematisch einen zeitlichen Ablauf einer Steuerung eines Arbeitszyklus einer Geschirrspülmaschine gemäß eines ersten Beispiels, das zum Verständnis der Erfindung hilfreich ist,,
Fig. 3 zeigt einen Temperaturverlauf und eine Steuerung innerhalb eines Betriebszyklus einer Geschirrspülmaschine gemäß des ersten Beispiels,
Fig. 4 schematisch einen zeitlichen Ablauf einer Steuerung eines Arbeitszyklus einer erfindungsgemäßen Geschirrspülmaschine gemäß einer Ausführungsform,
Fig. 5 zeigt einen Temperaturverlauf und eine Steuerung innerhalb eines Betriebszyklus einer erfindungsgemäßen Geschirrspülmaschine gemäß einer ersten Variante der Ausführungsform,
Fig. 6 zeigt einen Temperaturverlauf und eine Steuerung innerhalb eines Betriebszyklus einer erfindungsgemäßen Geschirrspülmaschine gemäß einer zweiten Variante der Ausführungsform, und
Fig. 7 zeigt einen Temperaturverlauf und eine Steuerung innerhalb eines Betriebszyklus eine Geschirrspülmaschine gemäß dem Stand der Technik.

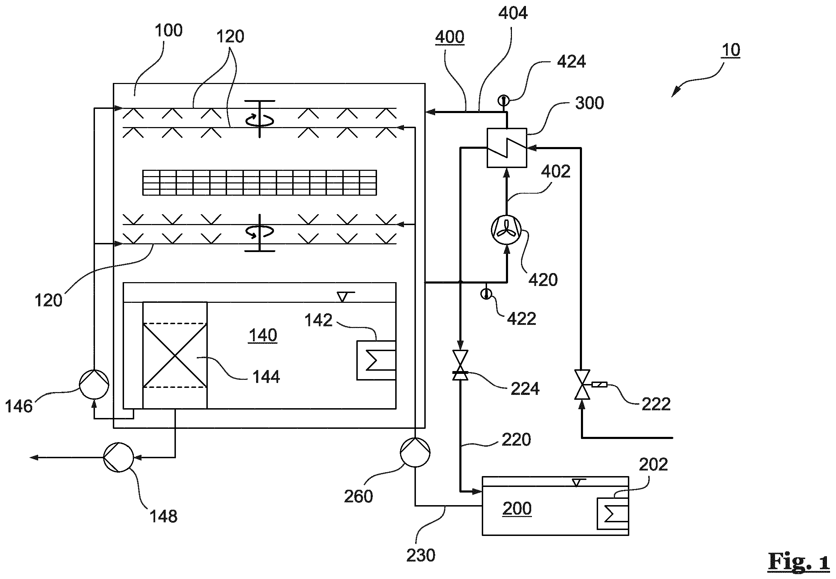

Fig. 1 zeigt schematisch eine Funktionsskizze einer Ausführungsform einer erfindungsgemäßen Geschirrspülmaschine 10, die einen Spülraum 100 aufweist. Die Geschirrspülmaschine 10 umfasst mehrere Abgabevorrichtungen, bei dieser Ausführungsform Spülarme 120, die drehbar in dem Spülraum 100 der Geschirrspülmaschine 10 angeordnet sind.

Die Geschirrspülmaschine 10 umfasst ferner einen Tank 140 mit einem Siebsystem 144, wobei in dem Tank 140 eine Heizvorrichtung 142 vorgesehen ist, um die in dem Tank 140 befindliche Flüssigkeit, insbesondere Reinigungsflüssigkeit, zu erhitzen.

Die in Fig. 1 gezeigte Ausführungsform der Geschirrspülmaschine 10 umfasst ferner einen Boiler 200 zum Erwärmen einer Behandlungsflüssigkeit, insbesondere einer Nachspülflüssigkeit. Der Boiler 200 kann mittels einer Zulaufleitung 220 mit der Behandlungsflüssigkeit gefüllt werden, ferner ist der Boiler 200 mit einer Abgabeleitung 230 verbunden, über die die Behandlungsflüssigkeit, insbesondere die Nachspülflüssigkeit, an Abgabevorrichtung in dem Spülraum 100, hier die Spülarme 120, transportiert werden kann.

Die Zulaufleitung 220 umfasst eine Ventilvorrichtung 222, bei dieser Ausführungsform ein Magnetventil. Die Ventilvorrichtung 222 ermöglicht ein Zuführen von Behandlungsflüssigkeit in den Boiler 200, wenn sie sich in einer Öffnungsstellung befindet, und sie unterbindet ein Zuführen von Behandlungsflüssigkeit in den Boiler 200, wenn sie sich in einer Schließstellung befindet.

In der Zulaufleitung 220 befindet sich ferner eine wassertechnische Sicherung 224.

In der Abgabeleitung 230 ist eine Beförderungs-Vorrichtung, hier eine Nachspülpumpe 260 vorgesehen, die in einem Einschaltzustand eine Abgabe bzw. eine Förderung von Behandlungsflüssigkeit aus dem Boiler 200 an die Abgabevorrichtungen, hier die Spülarme 120, ermöglicht, während in einem Ausschaltzustand der Nachspülpumpe 260 keine Nachspülflüssigkeit an die Spülarme 120 abgegeben wird.

Die Geschirrspülmaschine 10 umfasst ferner einen Wrasenkreislauf 400, wobei Wrasen über eine Leitung 400 aus dem Spülraum 100 herausgeleitet, durch einen Wärmetauscher 300 geführt und wieder in den Spülraum 100 hineingeleitet wird. Hierzu ist bei dieser Ausführungsform ein Wrasen-Lüfter 420 vorgesehen, der bei dieser Ausführungsform in Kreislaufrichtung vor dem Wärmetauscher 300 angeordnet ist. Der Wrasen Lüfter 420 kann aber auch in Kreislaufrichtung nach dem Wärmetauscher 300 angeordnet sein.

Der Wrasenkreislauf 400 umfasst bei dieser Ausführungsform zwei Temperatursensoren 422 und 424, wobei der erste Temperatursensor 422 in Kreislaufrichtung vor dem Wärmetauscher 300 angeordnet ist, während der zweite Temperatursensor 424 in Kreislaufrichtung nach dem Wärmetauscher 300 angeordnet ist. Der erste Temperatursensor 422 ist insbesondere bevorzugt in der Nähe des Spülraums 100, besonders bevorzugt direkt an der Stelle in dem Wrasenkreislauf 400 angeordnet, der an den Spülraum 100 angrenzt.

Die Geschirrspülmaschine 10 umfasst bei dieser Ausführungsform ferner eine Waschpumpe 146, die Waschflüssigkeit aus dem Tank 140 an die Spülarme 120 abgeben kann. Die über die Spülarme 120 abgegebene Waschflüssigkeit sammelt sich dann nach Abgabe in den Spülraum 100 wieder in dem Tank 140, so dass ein Waschkreislauf erzeugt wird. Ferner umfasst die Geschirrspülmaschine 10 eine Laugenpumpe 148, über die verschmutzte Waschflüssigkeit abgegeben und entsorgt werden kann.

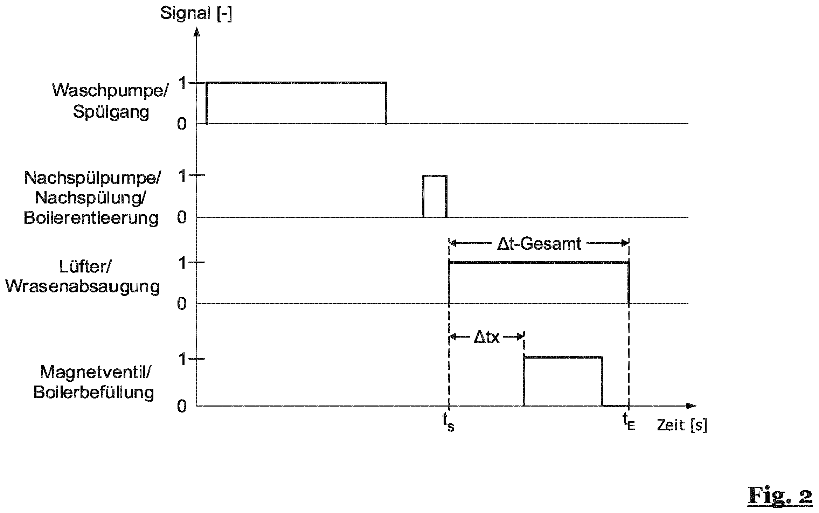

Fig. 2 zeigt schematisch einen zeitlichen Ablauf einer Steuerung eines Arbeitszyklus einer Ausführungsform einer Geschirrspülmaschine gemäß eines ersten Beispiels, wobei jedoch nicht alle Merkmale der vorliegenden Erfindung dargestellt oder realisiert sind. Während des Spülvorgangs der Geschirrspülmaschine 10 läuft die Waschpumpe 146 über einen vorgegebenen Zeitraum. Nach einer kurzen Pause, innerhalb der Spülflüssigkeit von dem Geschirr abtropfen kann, so dass diese Pause auch als Abtropfzeit bezeichnet wird, wird für einen festgelegten Zeitraum die Nachspülpumpe 260 eingeschaltet, so dass Nachspülflüssigkeit aus dem Boiler 200 über die Leitung 230 an die Spülarme 120 abgegeben wird, wobei sich der Boiler 200 entleert.

Die Absaugvorrichtung, hier der Wrasen-Lüfter 420, wird während eines Betriebszyklus A für einen Gesamt-Zeitraum Δt-Gesamt, der sich von einem Start-Zeitpunkt t_{S} bis zu einem End-Zeitpunkt t_{E} erstreckt, kontinuierlich in ihren Einschaltzustand geschaltet.

Wie gut in Fig. 2 ersichtlich ist, wird jedoch die Ventilvorrichtung 222 so geschaltet, dass sie sich während des Betriebszyklus A nicht über den Gesamt-Zeitraum Δt-Gesamt kontinuierlich in ihrer Öffnungsstellung befindet, vielmehr wird die Ventilvorrichtung 222 erst nach einer zeitlichen Verzögerung Δtx nach dem Start-Zeitpunkt t_{S} von ihrer Schließstellung in eine Öffnungsstellung geschaltet.

Die Ventilvorrichtung 222 wird dann wieder nach einem bestimmten Zeitraum, bevorzugt wenn der Boiler 200 wieder vollständig gefüllt ist, in ihre Schließstellung schaltet.

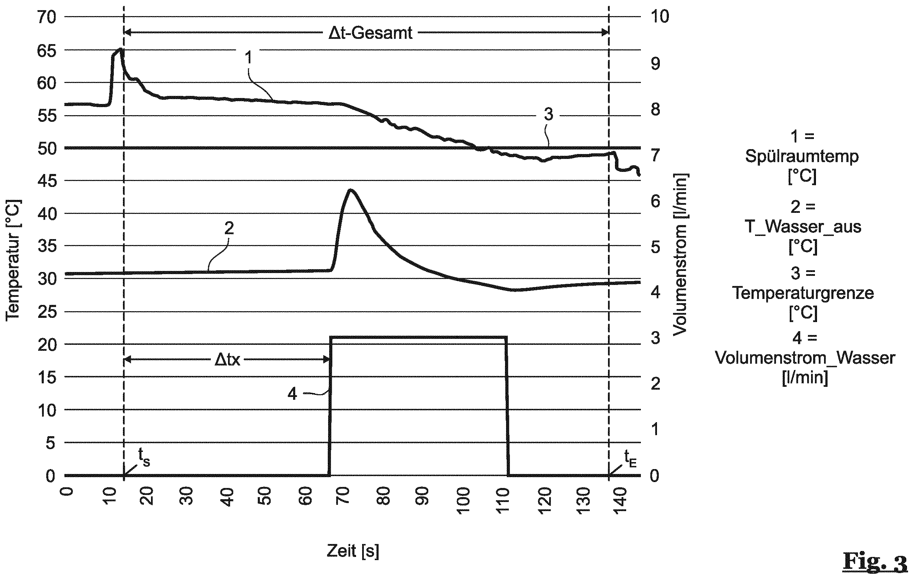

Fig. 3 zeigt den zu einer Steuerung, wie sie in Fig. 2 dargestellt ist, gehörigen Verlauf der Spülraumtemperatur. Die Temperatur wurde für diese Messung mittels eines in dem Spülraum 100 angeordneten Sensors gemessen, diese entspricht aber auch im wesentlichen der Temperatur, wie sie von dem Temperatursensor 422 gemessen wird, der sich in dem Wrasenkreislauf in Kreislaufrichtung vor dem Wärmetauscher 300 befindet.

Fig. 3 zeigt ferner den Verlauf der Wassertemperatur (T_Wasser_aus) innerhalb der Zulaufleitung 220 in einer Position direkt nach dem Wärmetauscher 300.

Wie gut in Fig. 3 ersichtlich ist, wird bereits etwas vor dem Zeitpunkt t_{S} zuerst eine Erhöhung der Spülraumtemperatur gemessen, was darauf beruht, dass sich die Spülraumtemperatur zuerst während des Nachspülvorganges (typische Temperaturen für die Nachspülflüssigkeit liegen in einem Bereich von etwa 65 °C bei einem Gläserspülprogramm, bei Geschirr liegt diese Temperatur im Gewerblichen Bereich bei etwa 85°C) erhöht.

Zum Zeitpunkt t_{S} wird der Wrasen-Lüfter 420 eingeschaltet, und der sich in dem Spülraum 100 befindliche Wrasen wird durch den Wrasenkreislauf und damit durch den Wärmetauscher 300 geführt. Die Spülraumtemperatur sinkt zuerst deutlich aufgrund der Wirkung des Wärmetauschers 300. Nachdem jedoch die im Wärmetauscher 300 enthaltene Flüssigkeit zuerst nicht ausgetauscht wird, weil die Ventilvorrichtung 222 geschlossen ist, sinkt die Wirkung des Wärmetauschers 300, sodass sich die gemessene Temperatur nur noch geringfügig reduziert und die Temperaturreduzierung abflacht.

Nach einem Zeitraum Δtx, bei dieser Ausführungsform nach einer Verzögerung von etwa 50 - 55 Sekunden, wird jedoch die Ventilvorrichtung 222 geöffnet, so dass neue Behandlungsflüssigkeit über die Leitung 220 zugeführt wird, so dass dem Wärmetauscher 300 kühlere Behandlungsflüssigkeit zugeführt wird, während die bereits aufgewärmte Behandlungsflüssigkeit in den Boiler 200 befördert wird. Die Wirkung des Wärmetauschers 300 nimmt daher in diesem Zeitraum wieder zu, so dass ein deutliches Gefälle der gemessenen Spülraumtemperatur beobachtet werden kann.

Die Ventilvorrichtung 222 wird wieder geschlossen, wenn der Boiler 200 wieder gefüllt ist.

Wie man in Fig. 3 gut erkennen kann, liegt die gemessene Spülraumtemperatur am End-Zeitpunkt t_{E} des Gesamtzeitraums bei einer Temperatur von merklich unter 50 °C, wobei diese Temperatur von 50°C empirisch als sogenannte "Temperaturgrenze" ermittelt wurde, insbesondere weil diese Temperatur als ein Wert ermittelt wurde, der auch bei regelmäßigen Gebrauch der Geschirrspülmaschine einen akzeptablen Einfluss auf das Raumklima ergab.

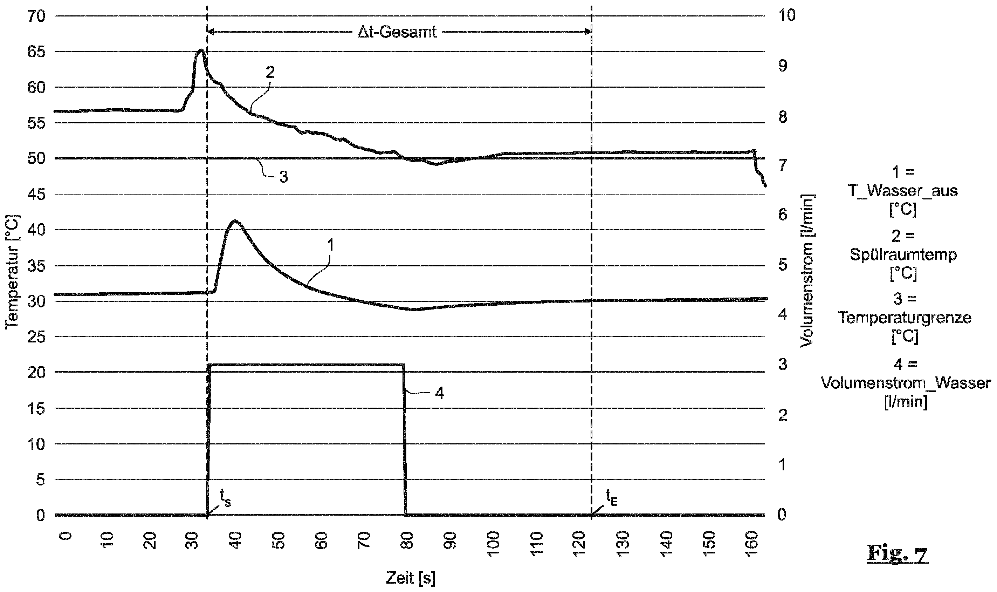

Zum Vergleich mit einer Steuerung gemäß dem Stand der Technik wird auf die Fig. 7 verwiesen. Entgegen der Steuerung bei einer Geschirrspülmaschine gemäß der vorliegenden Erfindung wird im Stand der Technik die Ventilvorrichtung 422 zum gleichen Zeitpunkt geöffnet, zu dem auch die Absaugvorrichtung, d. h. der Wrasen-Lüfter 420, eingeschaltet wird. Die Ventilvorrichtung 422 wird auch in diesem Falle wieder geschlossen, wenn der Boiler 200 gefüllt ist.

Wie in Fig. 7 ersichtlich führt dies aber zum End-Zeitpunkt t_{E} zu einer um mehrere Grad Celsius höheren Temperatur, was das Raumklima verschlechtert, wobei jede auch nur geringfügige Temperaturreduzierung aufgrund der Reduzierung des absoluten Feuchtigkeitsgehalts des Wrasens zu einem deutlich verbesserten Raumklima führt.

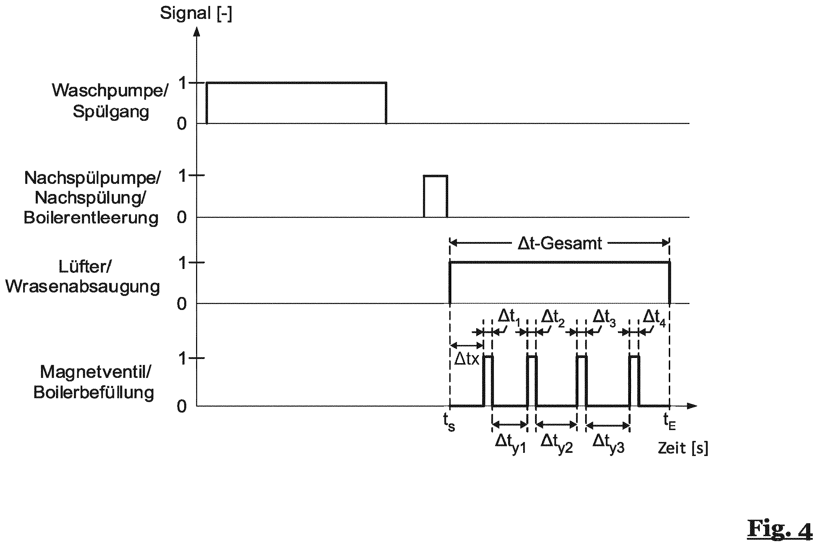

Fig. 4 zeigt schematisch einen zeitlichen Ablauf einer Steuerung eines Arbeitszyklus einer erfindungsgemäßen Geschirrspülmaschine gemäß einer Ausführungsform. Bei dieser Ausführungsform wird die Ventilvorrichtung 222 erst nach einer Verzögerung Δtx, geöffnet, dann aber wieder nach einem Zeitraum von Δt1 geschlossen, nach einem weiteren Zeitraum von Δty1 wieder geöffnet und nach einem weiteren Zeitraum von Δt2 wieder geschlossen, wobei die Ventilvorrichtung 222 sich insgesamt 4 mal in ihrer Öffnungsstellung befindet, also getaktet betrieben wird.

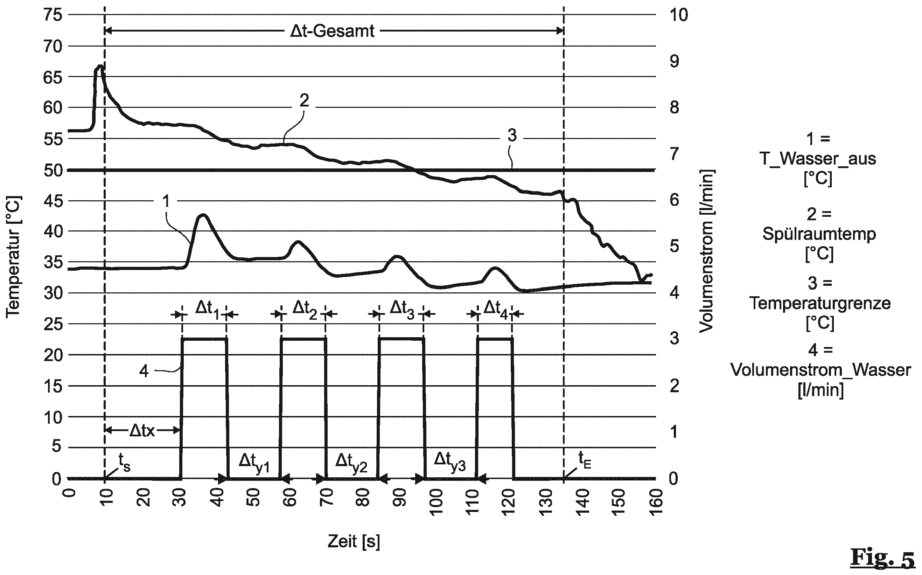

Fig. 5 zeigt eine Steuerung und einen Temperaturverlauf bei einer erfindungsgemäßen Geschirrspülmaschine gemäß einer ersten Variante dieser Ausführungsform. Bei dieser Variante wird die Ventilvorrichtung 222 erst nach einer Verzögerung Δtx, bei dieser Ausführungsform nach einer Verzögerung von 20 Sekunden geöffnet, dann aber wieder nach einem Zeitraum von 12 Sekunden geschlossen, nach weiteren 15 Sekunden wieder geöffnet und nach weiteren 12 Sekunden wieder geschlossen, wobei die Ventilvorrichtung 222 sich insgesamt 4 mal in ihrer Öffnungsstellung befindet, also getaktet betrieben wird.

Wie man sehr deutlich in Fig. 5 sieht, führt dies zu einer noch weiter gesenkten Spülraumtemperatur zum End-Zeitpunkt t_{E}. Die oben beschriebenen, sehr vorteilhaften Effekte werden also bei dieser getakteten Steuerung noch deutlicher.

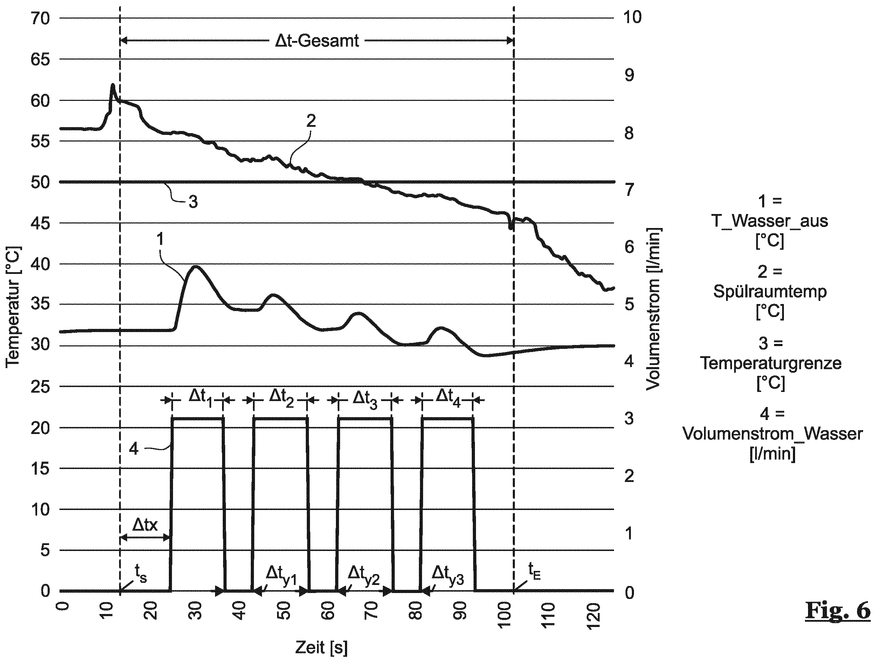

Fig. 6 zeigt eine Steuerung und einen Temperaturverlauf bei einer erfindungsgemäßen Geschirrspülmaschine gemäß einer zweiten Variante dieser Ausführungsform, die aber sehr vergleichbar mit der in Fig. 5 gezeigten Variante der Ausführungsform ist, bei der die Ventilvorrichtung 222 ebenfalls getaktet betrieben wird.

Bei dieser Ausführungsform wird die Ventilvorrichtung 222 nach einer Verzögerung Δtx nach dem Start-Zeitpunkt t_{S} von 10 Sekunden zum ersten Mal in ihrer Öffnungsstellung geschaltet, und danach ebenfalls getaktet betrieben. Bei dieser Ausführungsform wird die Ventilvorrichtung 222 jeweils für 12 Sekunden in ihre Einschaltstellung geschaltet, danach für jeweils 7 Sekunden in ihre Ausschaltstellung geschaltet, wobei sich die Ventilvorrichtung insgesamt 4 mal in ihrer Öffnungsstellung befindet, also ebenfalls getaktet betrieben wird.

Wie man ebenfalls sehr deutlich in Fig. 6 sieht, führt dies ebenfalls zu einer sehr deutlich gesenkten Spülraumtemperatur zum End-Zeitpunkt t_{E}.

Bei einem Vergleich der verschiedenen Ausführungsformen und Varianten zeigt sich, dass insbesondere die Ausführungen der erfindungsgemäßen Geschirrspülmaschine, die getaktet betrieben werden, zu einer besonders effektiven Temperatursenkung führen, so dass insbesondere diese getakteten Realisierungen bevorzugt sind.

Es ist dabei festzuhalten, dass zwar die beiden Ausführungsformen jeweils vier Einschalttakte realisieren, aber auch bei anderen Ausführungsformen, beispielsweise mit zwei oder drei Einschalttakten, alternativ auch mit mehr als vier Einschalttakten, wird eine besonders starke Temperatursenkung innerhalb des Spülraums erzielt. Auch ist festzuhalten, dass die Takte nicht zwangsweise gleiche Längen oder gleichlange Unterbrechungs-Zeiträume aufweisen müssen, auch wenn dies bevorzugt ist.

Die in der Beschreibung und in den Figuren dargestellten Merkmale können sowohl einzeln als auch in beliebiger Kombination für die Realisierung der Erfindung wesentlich sein.

## Patentansprüche

1. Gewerbliche Geschirrspülmaschine (10) mit einem Spülraum (100), in dem mindestens eine Abgabevorrichtung zur Abgabe einer Behandlungsflüssigkeit angeordnet ist, wobei die Geschirrspülmaschine (10) ferner umfasst:
- einen Wrasenkreislauf (400), der so ausgebildet ist, dass Wrasen aus dem Spülraum (100) herausgeleitet und wieder in den Spülraum (100) eingeleitet werden kann,
- einen Boiler (200) zum Erwärmen von Behandlungsflüssigkeit, wobei der Boiler (200) mittels einer Zulaufleitung (220) mit der Behandlungsflüssigkeit gefüllt werden kann und wobei der Boiler (200) mit einer Abgabeleitung (230) verbunden ist, über die die Behandlungsflüssigkeit an die mindestens eine Abgabevorrichtung in dem Spülraum (100) transportiert werden kann,
- wobei der Zulaufleitung (220) eine Ventilvorrichtung (222), insbesondere ein Magnetventil, zugeordnet ist, die in einer Öffnungsstellung ein Zuführen von Behandlungsflüssigkeit in den Boiler (200) ermöglicht oder in einer Schließstellung ein Zuführen von Behandlungsflüssigkeit in den Boiler (200) unterbindet, und wobei der Abgabeleitung (230) eine Beförderungs-Vorrichtung, insbesondere eine Pumpe, zugeordnet ist, die in einem Einschaltzustand eine Abgabe von Behandlungsflüssigkeit aus dem Boiler (200) an die mindestens eine Abgabevorrichtung in dem Spülraum (100) ermöglicht oder und in einem Ausschaltzustand eine solche Abgabe unterbindet,
- einen Wärmetauscher (300), der so mit dem Wrasenkreislauf (400) und der Zulaufleitung (220) gekoppelt ist, dass ein Wärmeaustausch zwischen dem durch den Wrasenkreislauf (400) geführten Wrasen und der durch die Zulaufleitung (220) geführten Behandlungsflüssigkeit stattfinden kann,
- eine Absaugvorrichtung, die so ausgebildet ist, dass sie Wrasen durch den Wrasenkreislauf (400) zirkuliert, wobei die Absaugvorrichtung mittels einer Regelvorrichtung in einen Einschaltzustand oder einen Ausschaltzustand geschaltet werden kann,
**dadurch gekennzeichnet, dass**
die Geschirrspülmaschine (10) eine Steuervorrichtung umfasst, die so ausgebildet ist, dass
- sie die Absaugvorrichtung während eines Betriebszyklus A für einen Gesamt-Zeitraum (Δt-Gesamt), der sich von einem Start-Zeitpunkt (t_{S}) bis zu einem End-Zeitpunkt (t_{E}) erstreckt, kontinuierlich in ihren Einschaltzustand schaltet, und so dass
- sie die Ventilvorrichtung (222) so schaltet, dass sie sich während des Betriebszyklus A nicht über den gesamten Gesamt-Zeitraum (Δt-Gesamt) kontinuierlich in ihrer Öffnungsstellung befindet,
- wobei die Ventilvorrichtung (222) so gesteuert ist, dass sie sich während mindestens zwei um einen Unterbrechungs-Zeitraum (Δty) voneinander getrennten Zeiträumen (Δt1, Δt2) in ihrer Öffnungsstellung befindet, während sie sich innerhalb des Unterbrechungs-Zeitraums (Δty) in ihrer Schließstellung befindet.

2. Geschirrspülmaschine (10) nach Anspruch 1, **dadurch gekennzeichnet, dass** die Steuervorrichtung so ausgebildet ist, dass sie die Ventilvorrichtung (222) so steuert, dass sie sich während mindestens drei voneinander getrennten Zeiträume (Δt1, Δt2, Δt3), bevorzugt während mindestens vier voneinander getrennten Zeiträume (Δt1, Δt2, Δt3, Δt4, ...., Δti) in ihrer Öffnungsstellung befindet, während sie sich zwischen diesen Zeiträumen in ihrer Schließstellung befindet.

3. Geschirrspülmaschine (10) nach Anspruch 1 oder 2, **dadurch gekennzeichnet, dass** zumindest zwei der voneinander getrennten Zeiträume (Δt1, Δt2, Δt3, Δt4, ...., Δti), bevorzugt alle der voneinander getrennten Zeiträume (Δt1, Δt2, Δt3, Δt4, ...., Δti), gleich lang sind.

4. Geschirrspülmaschine (10) nach einem der Ansprüche 2 oder 3, **dadurch gekennzeichnet, dass** der oder die Unterbrechungs- Zeiträume (Δty), innerhalb derer sich die Ventilvorrichtung (222) in ihrer Schließstellung befindet, alle gleich lang sind.

5. Geschirrspülmaschine (10) nach einem der vorhergehenden Ansprüche, **dadurch gekennzeichnet, dass** der Wrasenkreislauf (400) einen ersten Temperatursensor (422) aufweist, der in Kreislaufrichtung vor dem Wärmetauscher (300) angeordnet ist.

6. Geschirrspülmaschine (10) nach einem der vorhergehenden Ansprüche, **dadurch gekennzeichnet, dass** der Wrasenkreislauf (400) zwei Temperatursensoren (422, 424) aufweist, wobei ein erster Temperatursensor (422) in Kreislaufrichtung vor dem Wärmetauscher (300) und ein zweiter Temperatursensor (424) in Kreislaufrichtung nach dem Wärmetauscher (300) angeordnet ist.

7. Geschirrspülmaschine (10) nach Anspruch 6, **dadurch gekennzeichnet, dass** der Steuervorrichtung die Messergebnisse des ersten und/oder des zweiten Temperatursensors (422, 424) zugeführt werden und die Steuervorrichtung die Absaugvorrichtung und/oder die Ventilvorrichtung (222) in Abhängigkeit der Messergebnisse des ersten und/oder des zweiten Temperatursensors (422, 424) steuert.

8. Geschirrspülmaschine (10) nach Anspruch 6 oder 7, **dadurch gekennzeichnet, dass** die Steuervorrichtung eine Differenztemperatur (ΔT) der Messwerte (T1) des ersten Temperatursensors (422) und der Messwerte (T2) des zweiten Temperatursensors (424) ermittelt und die Ventilvorrichtung (222) in Abhängigkeit von dieser Differenztemperatur (ΔT, mit ΔT = T1 - T2) steuert.

9. Geschirrspülmaschine (10) nach Anspruch 8, **dadurch gekennzeichnet, dass** die Steuervorrichtung so ausgebildet ist, dass sie die Ventilvorrichtung (222) zumindest einmal von ihrer Schließstellung in ihre Öffnungsstellung schaltet, wenn die Differenztemperatur (ΔT) einen festgelegten Grenzwert (ΔTM1) unterschreitet oder einen festgelegten Grenzwert (ΔTM2) für einen festgelegten Zeitraum (ΔtM2) unterschreitet.

10. Geschirrspülmaschine (10) nach Anspruch 9, **dadurch gekennzeichnet, dass** die Steuervorrichtung so ausgebildet ist, dass sie die Ventilvorrichtung (222) nach einem festgelegten, bevorzugt einstellbaren, Zeitraum (ΔtE) ab dem Wechsel in ihre Öffnungsstellung wieder in die Schließstellung schaltet.

11. Geschirrspülmaschine (10) nach einem der Ansprüche 5 bis 10, **dadurch gekennzeichnet, dass** die Steuervorrichtung die Länge des Gesamt-Zeitraums (Δt-Gesamt) des Betriebszyklus in Abhängigkeit der Messergebnisse des ersten Temperatursensors (422) regelt.

12. Geschirrspülmaschine (10) nach einem der Ansprüche 5 bis 11, **dadurch gekennzeichnet, dass** die Steuervorrichtung die Länge der Zeiträume (Δt1, Δt2, Δt3, Δt4) und oder die Länge der zeitlichen Verzögerung (Δtx) oder die Länge des Unterbrechungs-Zeitraums (Δty) in Abhängigkeit der Messergebnisse des ersten Temperatursensors und/oder des zweiten Temperatursensors (422, 424) und/oder der Differenztemperatur (ΔT) regelt.

13. Geschirrspülmaschine (10) nach einem der vorhergehenden Ansprüche, **dadurch gekennzeichnet, dass** die Steuervorrichtung so ausgebildet ist, dass sie die Ventilvorrichtung (222) so steuert, dass sie erst nach einer zeitlichen Verzögerung (Δtx) nach dem Start-Zeitpunkt (t_{S}) von ihrer Schließstellung in eine Öffnungsstellung geschaltet wird.

14. Verfahren zum Betreiben einer gewerblichen Geschirrspülmaschine (10) mit einem Spülraum (100) und einer Abgabevorrichtung zur Abgabe von Behandlungsflüssigkeit, insbesondere Geschirrspülmaschine (10) nach einem der vorhergehenden Ansprüche, wobei die Geschirrspülmaschine (10) ferner umfasst:
- einen Wrasenkreislauf (400), der so ausgebildet ist, dass Wrasen aus dem Spülraum (100) herausgeleitet und wieder in den Spülraum (100) eingeleitet werden kann,
- einen Boiler (200) zum Erwärmen von Behandlungsflüssigkeit, wobei der Boiler (200) mittels einer Zulaufleitung (220) mit der Behandlungsflüssigkeit gefüllt werden kann und wobei der Boiler (200) mit einer Abgabeleitung (230) verbunden ist, über die die Behandlungsflüssigkeit an die mindestens eine Abgabevorrichtung in dem Spülraum (100) transportiert werden kann,
- wobei der Zulaufleitung (220) eine Ventilvorrichtung (222), insbesondere ein Magnetventil, zugeordnet ist, die in einer Öffnungsstellung ein Zuführen von Behandlungsflüssigkeit in den Boiler (200) ermöglicht oder in einer Schließstellung ein Zuführen von Behandlungsflüssigkeit in den Boiler (200) unterbindet, und wobei der Abgabeleitung (230) eine Beförderungs-Vorrichtung, insbesondere eine Pumpe, zugeordnet ist, die in einem Einschaltzustand eine Abgabe von Behandlungsflüssigkeit aus dem Boiler (200) an die mindestens eine Abgabevorrichtung in dem Spülraum (100) ermöglicht oder und in einem Ausschaltzustand eine solche Abgabe unterbindet,
- einen Wärmetauscher (300), der so mit dem Wrasenkreislauf (400) und der Zulaufleitung (220) gekoppelt ist, dass ein Wärmeaustausch zwischen dem durch den Wrasenkreislauf (400) geführten Wrasen und der durch die Zulaufleitung (220) geführten Behandlungsflüssigkeit stattfinden kann,
- eine Absaugvorrichtung, die so ausgebildet ist, dass sie Wrasen durch den Wrasenkreislauf (400) zirkuliert, wobei die Absaugvorrichtung mittels einer Regelvorrichtung in einen Einschaltzustand oder einen Ausschaltzustand geschaltet werden kann,
**dadurch gekennzeichnet, dass**
die Geschirrspülmaschine (10) eine Steuervorrichtung umfasst, die so ausgebildet ist, dass
- sie die Absaugvorrichtung während eines Betriebszyklus A für einen Gesamt-Zeitraum (Δt-Gesamt), der sich von einem Start-Zeitpunkt (t_{S}) bis zu einem End-Zeitpunkt (t_{E}) erstreckt, kontinuierlich in ihren Einschaltzustand schaltet, und so dass
- sie die Ventilvorrichtung (222) so schaltet, dass sie sich während des Betriebszyklus A nicht über den gesamten Gesamt-Zeitraum (Δt-Gesamt) kontinuierlich in ihrer Öffnungsstellung befindet,
- wobei die Ventilvorrichtung (222) so gesteuert ist, dass sie sich während mindestens zwei um einen Unterbrechungs-Zeitraum (Δty) voneinander getrennten Zeiträumen (Δt1, Δt2) in ihrer Öffnungsstellung befindet, während sie sich innerhalb des Unterbrechungs-Zeitraums (Δty) in ihrer Schließstellung befindet.

## Claims

1. Commercial dishwasher (10) having a washing chamber (100) in which at least one dispensing device for dispensing a treatment liquid is arranged, wherein the dishwasher (10) further comprises:
- a waste steam circuit (400) that is designed such that the waste steam can be guided out of the washing chamber (100) and introduced back into the washing chamber (100),
- a boiler (200) for heating treatment liquid, wherein the boiler (200) can be filled with the treatment liquid by means of a supply line (220), and wherein the boiler (200) is connected to a dispensing line (230), via which the treatment liquid can be transported to the at least one dispensing device in the washing chamber (100),
- wherein a valve arrangement (222), in particular a magnetic valve, is assigned to the supply line (220), and, in the open position of the valve arrangement, facilitates a supply of the treatment liquid into the boiler (200), or, in a closed position, prevents a supply of treatement fluid into the boiler (200), and wherein a transportation device, in particular a pump, is assigned to the dispensing line (230) and, in a switched on state of the pump, facilitates a dispensing of treatment liquid out of the boiler (200) to the at least one dispensing device in the washing chamber (100) or, in a switched off state, prevents such a dispensing,
- a heat exchanger (300) which is coupled to the waste steam circuit (400) and to the supply line (220) such that a heat exchange can take place between the waste steam guided through the waste steam circuit (400) and the treatment liquid guided through the supply line (220),
- a suction device, which is designed such that it circulates the waste steam through the waste steam circuit (400), wherein the suction device can be switched into a switched on state or into a switched off state by means of a regulating device,
**characterized in that**
the dishwasher (10) comprises a control device, which is designed such that
- it switches the suction device continuously into its switched on state during an operating cycle A for a total time period (Δt-total), which extends from a starting time (t_{S}) to an end time (t_{E}), and such that
- it switches the valve device (222) such that it is not continuously located in its open position during the operating cycle A for the total time period (At-total)
- wherein the valve device (222) is controlled such that it is located in its open position during at least two time periods (Δt1, Δt2), which are separated from one another by an interruption time period (Δty), while it is located in its closed position within the interruption time period (Δty).

2. Dishwasher (10) according to claim 1, **characterized in that** the control device is designed such that it controls the valve device (222) such that it is located in its open position during at least three time periods (Δt1, Δt2, Δt3), which are separated from one another, preferably during at least four time periods (Δt1, Δt2, Δt3, Δt4 ..., Δti), which are separated from one another, while it is located in its closed position between these time periods.

3. Dishwasher (10) according to claim 1 or 2, **characterized in that** at least two of the time periods (Δt1, Δt2, Δt3, Δt4 ..., Δti), which are separated from one another, preferably all of the time periods (Δt1, Δt2, Δt3, Δt4 ..., Δti), which are separated from one another, are of equal length.

4. Dishwasher (10) according to one of claims 2 or 3, **characterized in that** the interruption period(s) (Δty), within which the valve device (222) is located in its closed position, are all of equal length.

5. Dishwasher (10) according to one of the preceding claims, **characterized in that** the waste steam circuit (400) has a first temperature sensor (422) which is arranged upstream of the heat exchanger (300) in the direction of the circuit.

6. Dishwasher (10) according to one of the preceding claims, **characterized in that** the waste steam circuit (400) has two temperature sensors (422, 424), wherein a first temperature sensor (422) is arranged upstream of the heat exchanger (300) in the direction of the circuit and a second temperature sensor (424) is arranged downstream of the heat exchanger (300) in the direction of the circuit.

7. Dishwasher (10) according to claim 6, **characterized in that** the measurement results of the first and/or the second temperature sensor(s) (422, 424) are supplied to the control device, and the control device controls the suction device and/or the valve device (222) depending on the measurement results of the first and/or the second temperature sensor(s) (422, 424).

8. Dishwasher (10) according to claim 6 or 7, **characterized in that** the control device determines a differential temperature (ΔT) of the measurement values (T1) of the first temperature sensor (422) and of the measurement values (T2) of the second temperature sensor (424) and controls the valve device (222) depending on this differential temperature (ΔT, where ΔT = T1 - T2).

9. Dishwasher (10) according to claim 8, **characterized in that** the control device is designed such that it switches the valve device (222) from its closed position into its open position at least once if the differential temperature (ΔT) underruns a defined threshold (ΔTM1), or underruns a defined threshold (ΔTM2) for a defined time period (ΔtM2).

10. Dishwasher (10) according to claim 9, **characterized in that** the control device is designed such that, after the switch into the open position, the control device switches the valve device (222) back into the closed position after a defined, preferably adjustable time period (ΔtE).

11. Dishwasher (10) according to one of claims 5 to 10, **characterized in that** the control device regulates the length of the total time period (Δt-total) of the operating cycle depending on the measurement results of the first temperature sensor (422).

12. Dishwasher (10) according to one of claims 5 to 11, **characterized in that** the control device regulates the length of the time periods (Δt1, Δt2, Δt3, Δt4) and/or the length of the temporal delay (Δtx) or the length of the interruption time period (Δty) depending on the measurement results of the first temperature sensor and/or of the second temperature sensor (422, 424) and/or the differential temperature (ΔT).

13. Dishwasher (10) according to one of the preceding claims, **characterized in that** the control device is designed such that it controls the valve device (222) such that it is only switched from its closed position into an open position after a temporal delay (Δtx) after the starting point in time (t_{S}).

14. Method for operating a commercial dishwasher (10) having a washing chamber (100) and a dispensing device for dispensing a treatment liquid, in particular a dishwasher (10) according to one of the preceding claims, wherein the dishwasher (10) further comprises:
- a waste steam circuit (400) that is designed such that the waste steam can be guided out of the washing chamber (100) and introduced back into the washing chamber (100),
- a boiler (200) for heating treatment liquid, wherein the boiler (200) can be filled with the treatment liquid by means of a supply line (220), and wherein the boiler (200) is connected to a dispensing line (230), via which the treatment liquid can be transported to the at least one dispensing device in the washing chamber (100),
- wherein a valve arrangement (222), in particular a magnetic valve, is assigned to the supply line (220), and, in the open position of the valve arrangement, facilitates a supply of the treatment liquid into the boiler (200), or, in a closed position, prevents a supply of treatement fluid into the boiler (200), and wherein a transportation device, in particular a pump, is assigned to the dispensing line (230) and, in a switched on state of the pump, facilitates a dispensing of treatment liquid out of the boiler (200) to the at least one dispensing device in the washing chamber (100) or, in a switched off state, prevents such a dispensing,
- a heat exchanger (300) which is coupled to the waste steam circuit (400) and to the supply line (220) such that a heat exchange can take place between the waste steam guided through the waste steam circuit (400) and the treatment liquid guided through the supply line (220),
- a suction device, which is designed such that it circulates the waste steam through the waste steam circuit (400), wherein the suction device can be switched into a switched on state or into a switched off state by means of a regulating device,
**characterized in that**
the dishwasher (10) comprises a control device, which is designed such that
- it switches the suction device continuously into its switched on state during an operating cycle A for a total time period (Δt-total), which extends from a starting time (t_{S}) to an end time (t_{E}), and such that
- it switches the valve device (222) such that it is not continuously located in its open position during the operating cycle A for the total time period (At-total)
- wherein the valve device (222) is controlled such that it is located in its open position during at least two time periods (Δt1, Δt2), which are separated from one another by an interruption time period (Δty), while it is located in its closed position within the interruption time period (Δty).

## Revendications

1. Lave-vaisselle professionnel (10) avec un compartiment de lavage (100) dans lequel au moins un dispositif de distribution pour la distribution d'un liquide de traitement est agencé, dans lequel le lave-vaisselle (10) comprend en outre :
- un circuit de vapeur (400), qui est conçu pour que la vapeur puisse être évacuée du compartiment de lavage (100) et réintroduite dans le compartiment de lavage (100) ;
- un chauffe-eau (200) pour chauffer le liquide de traitement, dans lequel le chauffe-eau (200) peut être rempli de liquide de traitement au moyen d'une conduite d'alimentation (220) et dans lequel le chauffe-eau (200) est connecté à une conduite de distribution (230), par laquelle le liquide de traitement peut être transporté vers l'au moins un dispositif de distribution dans le compartiment de lavage (100) ;
- dans lequel la conduite d'alimentation (220) est associée à un dispositif de vanne (222), notamment une électrovanne, qui, dans une position d'ouverture, permet l'alimentation en liquide de traitement dans le chauffe-eau (200) ou, dans une position de fermeture, empêche l'alimentation en liquide de traitement dans le chauffe-eau (200), et dans lequel la conduite de distribution (230) est associée à un dispositif de transport, notamment une pompe, qui, dans un état de marche, permet une distribution de liquide de traitement du chauffe-eau (200) vers l'au moins un dispositif de distribution dans le compartiment de lavage (100), ou, dans un état d'arrêt, empêche une telle distribution ;
- un échangeur de chaleur (300), qui est couplé au circuit de vapeur (400) et à la conduite d'alimentation (220) de façon à permettre un échange de chaleur entre la vapeur circulant dans le circuit de vapeur (400) et le liquide de traitement circulant dans la conduite d'alimentation (220) ;
- un dispositif d'extraction, qui est conçu pour faire circuler la vapeur à travers le circuit de vapeur (400), le dispositif d'extraction pouvant être commuté dans un état de marche ou un état d'arrêt au moyen d'un dispositif de régulation ;
**caractérisé en ce que** :
- le lave-vaisselle (10) comprend un dispositif de commande, qui est conçu de façon à :
- commuter le dispositif d'extraction en continu dans son état de marche pendant un cycle de fonctionnement A pour une durée totale (Δt-Gesamt), qui s'étend d'un instant de début (t_{S}) à un instant de fin (t_{E}), et de façon à :
- commuter le dispositif de vanne (222) de façon à ce qu'il ne se trouve pas en continu dans sa position d'ouverture pendant toute la durée totale (Δt-Gesamt) du cycle de fonctionnement A ;
- dans lequel le dispositif de vanne (222) est contrôlé de façon à se trouver dans sa position d'ouverture pendant au moins deux périodes (Δt1, Δt2) séparées l'une de l'autre par une période d'interruption (Δty), tandis qu'il se trouve dans sa position de fermeture pendant la période d'interruption (Δty).

2. Lave-vaisselle (10) selon la revendication 1, **caractérisé en ce que** le dispositif de commande est conçu de façon à contrôler le dispositif de vanne (222) pour qu'il se trouve dans sa position d'ouverture pendant au moins trois périodes (Δt1, Δt2, Δt3) séparées les unes des autres, de préférence pendant au moins quatre périodes (Δt1, Δt2, Δt3, Δt4,..., Δti) séparées les unes des autres, tandis qu'il se trouve entre ces périodes dans sa position de fermeture.

3. Lave-vaisselle (10) selon la revendication 1 ou 2, **caractérisé en ce qu'**au moins deux des périodes séparées (Δt1, Δt2, Δt3, Δt4,..., Δti), de préférence toutes les périodes séparées (Δt1, Δt2, Δt3, Δt4,..., Δti), ont la même durée.

4. Lave-vaisselle (10) selon l'une des revendications 2 ou 3, **caractérisé en ce que** la ou les périodes d'interruption (Δty), pendant lesquelles le dispositif de vanne (222) se trouve dans sa position de fermeture, ont toutes la même durée.

5. Lave-vaisselle (10) selon l'une des revendications précédentes, **caractérisé en ce que** le circuit de vapeur (400) comprend un premier capteur de température (422), qui est agencé dans le sens de la circulation en amont de l'échangeur de chaleur (300).

6. Lave-vaisselle (10) selon l'une des revendications précédentes, **caractérisé en ce que** le circuit de vapeur (400) comprend deux capteurs de température (422, 424), un premier capteur de température (422) étant agencé dans le sens de la circulation en amont de l'échangeur de chaleur (300) et un deuxième capteur de température (424) étant agencé dans le sens de la circulation en aval de l'échangeur de chaleur (300).

7. Lave-vaisselle (10) selon la revendication 6, **caractérisé en ce que** les résultats de mesure du premier et/ou du deuxième capteur de température (422, 424) sont transmis au dispositif de commande et le dispositif de commande contrôle le dispositif d'extraction et/ou le dispositif de vanne (222) en fonction des résultats de mesure du premier et/ou du deuxième capteur de température (422, 424).

8. Lave-vaisselle (10) selon la revendication 6 ou 7, **caractérisé en ce que** le dispositif de commande détermine une différence de température (ΔT) entre les valeurs mesurées (T1) du premier capteur de température (422) et les valeurs mesurées (T2) du deuxième capteur de température (424) et contrôle le dispositif de vanne (222) en fonction de cette différence de température (ΔT, avec ΔT = T1 - T2).

9. Lave-vaisselle (10) selon la revendication 8, **caractérisé en ce que** le dispositif de commande est conçu de façon à commuter le dispositif de vanne (222) au moins une fois de sa position de fermeture à sa position d'ouverture, lorsque la différence de température (ΔT) passe en dessous d'une valeur limite spécifiée (ΔTM1) ou passe en dessous d'une valeur limite spécifiée (ΔTM2) pendant une durée spécifiée (ΔtM2).

10. Lave-vaisselle (10) selon la revendication 9, **caractérisé en ce que** le dispositif de commande est conçu de façon à commuter le dispositif de vanne (222) de nouveau en position de fermeture après une durée spécifiée, de préférence réglable (ΔtE), à partir du passage en position d'ouverture.

11. Lave-vaisselle (10) selon l'une des revendications 5 à 10, **caractérisé en ce que** le dispositif de commande régule la durée de la période totale (Δt-Gesamt) du cycle de fonctionnement en fonction des résultats de mesure du premier capteur de température (422).

12. Lave-vaisselle (10) selon l'une des revendications 5 à 11, **caractérisé en ce que** le dispositif de commande régule la durée des périodes (Δt1, Δt2, Δt3, Δt4) et/ou la durée du délai (Δtx) ou la durée de la période d'interruption (Δty) en fonction des résultats de mesure du premier capteur de température et/ou du deuxième capteur de température (422, 424) et/ou de la différence de température (ΔT).

13. Lave-vaisselle (10) selon l'une des revendications précédentes, **caractérisé en ce que** le dispositif de commande est conçu de façon à contrôler le dispositif de vanne (222) pour qu'il ne soit commuté de sa position de fermeture à sa position d'ouverture qu'après un délai (Δtx) après l'instant de début (t_{S}).

14. Procédé de fonctionnement d'un lave-vaisselle professionnel (10) avec un compartiment de lavage (100) et un dispositif de distribution pour la distribution de liquide de traitement, notamment un lave-vaisselle (10) selon l'une des revendications précédentes, dans lequel le lave-vaisselle (10) comprend en outre :
- un circuit de vapeur (400), qui est conçu pour que la vapeur puisse être évacuée du compartiment de lavage (100) et réintroduite dans le compartiment de lavage (100) ;
- un chauffe-eau (200) pour chauffer le liquide de traitement, le chauffe-eau (200) pouvant être rempli de liquide de traitement au moyen d'une conduite d'alimentation (220) et le chauffe-eau (200) étant connecté à une conduite de distribution (230), par laquelle le liquide de traitement peut être transporté vers l'au moins un dispositif de distribution dans le compartiment de lavage (100) ;
- dans lequel la conduite d'alimentation (220) est associée à un dispositif de vanne (222), notamment une électrovanne, qui, dans une position d'ouverture, permet l'alimentation en liquide de traitement dans le chauffe-eau (200) ou, dans une position de fermeture, empêche l'alimentation en liquide de traitement dans le chauffe-eau (200), et dans lequel la conduite de distribution (230) est associée à un dispositif de transport, notamment une pompe, qui, dans un état de marche, permet une distribution de liquide de traitement du chauffe-eau (200) vers l'au moins un dispositif de distribution dans le compartiment de lavage (100), ou, dans un état d'arrêt, empêche une telle distribution ;
- un échangeur de chaleur (300), qui est couplé au circuit de vapeur (400) et à la conduite d'alimentation (220) de façon à permettre un échange de chaleur entre la vapeur circulant dans le circuit de vapeur (400) et le liquide de traitement circulant dans la conduite d'alimentation (220) ;
- un dispositif d'extraction, qui est conçu pour faire circuler la vapeur à travers le circuit de vapeur (400), le dispositif d'extraction pouvant être commuté dans un état de marche ou un état d'arrêt au moyen d'un dispositif de régulation ;
**caractérisé en ce que** :
le lave-vaisselle (10) comprend un dispositif de commande, qui est conçu de façon à :
- commuter le dispositif d'extraction en continu dans son état de marche pendant un cycle de fonctionnement A pour une durée totale (Δt-Gesamt), qui s'étend d'un instant de début (t_{S}) à un instant de fin (t_{E}), et de façon à :
- commuter le dispositif de vanne (222) de façon à ce qu'il ne se trouve pas en continu dans sa position d'ouverture pendant toute la durée totale (Δt-Gesamt) du cycle de fonctionnement A ;
- dans lequel le dispositif de vanne (222) est contrôlé de façon à se trouver dans sa position d'ouverture pendant au moins deux périodes (Δt1, Δt2) séparées l'une de l'autre par une période d'interruption (Δty), tandis qu'il se trouve dans sa position de fermeture pendant la période d'interruption (Δty).
